# EUROPÄISCHE PATENTANMELDUNG

(11) **EP 3 128 650 A1**
(43) Veröffentlichungstag der Anmeldung: **08.02.2017**
(21) Anmeldenummer: 16169625.7
(22) Anmeldetag: 13.05.2016
(51) Int. Cl.: H02K 3/52, H02K 3/28, H02K 11/20

(54) **GLEICHSTROMMASCHINE UND VERFAHREN ZUR HERSTELLUNG EINER GLEICHSTROMMASCHINE**

(30) Priorität: 04.08.2015 DE 102015112768
(71) Anmelder: Alber GmbH, 72461 Albstadt (DE)
(72) Erfinder: Kauffmann, Harald, 72461 Albstadt (DE); Bitzer, Paul-Gerhard, 72461 Albstadt (DE)
(74) Vertreter: Staudt, Hans-Peter

(57) **Zusammenfassung**

Eine Gleichstrommaschine weist auf einen Stator und einen Rotor, wobei einer der beiden mehrere Magnete aufweist, die abwechselnd Süd und Nord magnetisiert sind, und der andere mehrere Spulen aufweist, die durch Umwickeln von Zähnen mit isoliertem Draht gebildet sind, wobei zwischen diesen Spulen jeweils Schlitze gebildet und die Spulen zu Spulengruppen zusammengefasst sind, sowie einen stromgesteuerten Inverter zum Ansteuern der Maschine. Jede Spulengruppe weist einen Anfangskontaktpunkt und einen Endkontaktpunkt auf und die Spulengruppen sind zu einem definierten Verschaltungskonzept verbunden. Die Anfangskontaktpunkte und Endkontaktpunkte sind durch ein Verschaltungselement verbunden, das spezifisch für das definierte Verschaltungskonzept ausgelegt ist. Ein Verfahren zur Herstellung einer Gleichstrommaschine umfasst die Schritte Bereitstellen einer wickelbereiten Spulenanordnung, Bereitstellen abgreifbarer Anfangskontaktpunkte und Endkontaktpunkte, Bereitstellen eines Verschaltungselements zur Verwirklichung eines spezifischen Verschaltungskonzepts und Einsetzen und Fixieren des Verschaltungselements so, dass es mit den Anfangskontaktpunkten und Endkontaktpunkten in leitende Berührung gelangt.

## Beschreibung

Die vorliegende Erfindung betrifft eine Gleichstrommaschine, insbesondere eine elektrisch oder permanent erregte, bürstenlose Gleichstrommaschine, und ein Verfahren zur Herstellung einer Gleichstrommaschine.

Eine Maschine der in Rede stehenden Art ist beispielsweise aus der DE 199 83 946 B4 bekannt. Eine derartige Maschine, die als Motor oder Generator betrieben werden kann, umfasst zwei konzentrisch zueinander angeordnete Bauteile, üblicherweise Rotor und Stator genannt. Eines dieser Teile, also entweder Rotor oder Stator, weist eine bestimmte Anzahl von Magneten auf, beispielsweise Permanentmagnete, die abwechselnd Süd und Nord magnetisiert sind, und das jeweils andere Teil ist mit einer bestimmten Anzahl von Spulen versehen, die durch Umwickeln von Zähnen mit isoliertem Draht gebildet sind. Zwischen diesen Spulen sind jeweils Schlitze gebildet. Diese Schlitze sind somit die Zwischenräume zwischen nebeneinanderliegenden Zähnen.

Insbesondere die jeweilige Verwendung beziehungsweise der Einsatz einer derartigen Maschine bedingen oder legen nahe, ob der Rotor innerhalb oder außerhalb des Stators angebracht ist und welches von beiden Teilen mit den Permanentmagneten versehen ist, wobei dann entsprechend das andere Teil die Spulen und Schlitze aufweist. Die DE 199 83 946 B4 offenbart beispielsweise eine permanent erregte, bürstenlose Gleichstrommaschine, die als Fahrradantrieb in einem Rad als Nabenmotor eingesetzt ist, wobei der zentrale Teil stationär angeordnet und damit Stator ist und die Spulen und Nuten beziehungsweise Schlitze aufweist und der Rotor als Außenläufer mit den Permanentmagneten bestückt ist und, von einer wiederaufladbaren Batterie als Stromquelle gespeist, als Motor zum Antrieb und als Generator zur Energierückgewinnung und Aufladung der Batterie verwendet werden kann. Die Ansteuerung dieser Maschine erfolgt in bekannter Weise über einen stromgesteuerten Inverter mit drei Phasen.

Die Anzahl der Pole, das heißt Magnetpole, und der Schlitze beziehungsweise Nuten, das heißt der Spulen, ist ein wesentliches Merkmal bei der Auslegung einer derartigen Maschine. Die DE 199 83 946 B4 offenbart beispielsweise eine Maschinenvariante mit zweiundzwanzig Polen und vierundzwanzig Schlitzen und eine weitere Maschinenvariante mit vierundvierzig Polen und achtundvierzig Schlitzen.

Neben der Anzahl der Pole und Schlitze, der sogenannten Pol-Nutzahl-Kombination, sind jedoch noch weitere Merkmale einer derartigen Maschine für ihre Eigenschaften bestimmend. Hierzu zählt die Art der Wicklung und die Art, wie die Wicklung der Spulen geschaltet ist, das heißt die sogenannte Spulengruppenverschaltung. Die Spulen können zu Gruppen zusammengefasst werden und die Verschaltung kann erfolgen beispielsweise nach dem sogenannten Sterntyp oder in Form einer Dreieckschaltung.

Soll die Wicklung auf einer dazu ausgelegten teil-, oder vollautomatischen Wickelmaschine hergestellt werden, so bedeutet das ein hohes Investitionsvolumen. Typischerweise wird für jeden Wicklungstyp eine eigene Maschine bereitgestellt. Zumindest müssen solche Wickelmaschinen jedoch für jeden Wicklungstyp eigens eingerichtet und programmiert werden. Das bedeutet zusätzliche Investitionen und unproduktive Zeiten für die jeweilige Umrüstung und Programmierung.

Die Art der Wicklung und der Verschaltung der Wicklungen beziehungsweise eventueller Spulengruppen muss bereits bei der Auslegung der Maschine in Betracht gezogen werden, entsprechende Abgriffspunkte oder Kontaktpunkte müssen eingeplant und bereitgestellt werden.

Der Erfindung liegt die Aufgabe zugrunde, im Hinblick auf das vorstehend Dargelegte eine Gleichstrommaschine bereitzustellen, die eine hohe Variabilität aufweist, sowie ein diesbezügliches Herstellungsverfahren.

Diese Aufgabe wird durch eine Gleichstrommaschine gemäß Patentanspruch 1 sowie ein Verfahren zur Herstellung einer Gleichstrommaschine gemäß Patentanspruch 7 gelöst. Vorteilhafte Ausführungsformen sind in den Unteransprüchen angegeben.

Die erfindungsgemäße Gleichstrommaschine umfasst einen Stator und einen Rotor, wobei einer der beiden mehrere Magnete aufweist, die abwechselnd Süd und Nord magnetisiert sind, und der andere mehrere Spulen aufweist, die durch Umwickeln von Zähnen mit isoliertem Draht gebildet sind, wobei zwischen diesen Spulen jeweils Schlitze gebildet und die Spulen zu Spulengruppen zusammengefasst sind, und einen stromgesteuerten Inverter zum Ansteuern der Maschine, wobei jede Spulengruppe einen Anfangskontaktpunkt und einen Endkontaktpunkt aufweist und die Spulengruppen zu einem definierten Verschaltungskonzept verbunden sind und wobei die Anfangskontaktpunkte und Endkontaktpunkte durch ein Verschaltungselement verbunden sind, das spezifisch für das definierte Verschaltungskonzept ausgelegt ist.

Das Verschaltungskonzept der Spulen beziehungsweise Spulengruppen bedingt einen bestimmten Motortyp. Dieser Motortyp kann zum Beispiel eine sogenannte Sternanordnung oder Dreieckanordnung sein, jeweils mit mehr oder weniger parallel und/oder seriell geschalteten Spulen beziehungsweise Spulengruppen. Dieses Verschaltungskonzept und damit der Motortyp, die jeweils unterschiedliche Charakteristiken aufweisen, ergeben sich dadurch, wie und in welcher Reihenfolge die Anfangskontaktpunkte und Endkontaktpunkte, auch Terminals genannt, miteinander verbunden und verschaltet werden.

Ein Verschaltungselement im Sinne der Erfindung ist ein separates beziehungsweise eigenständiges Bauteil beziehungsweise eine derartige Bauteilgruppe, die exakt für das jeweilige Verschaltungskonzept hergerichtet beziehungsweise ausgelegt ist. Im Zusammenwirken mit den definierten Anfangskontaktpunkten und Endkontaktpunkten hat dieses Verschaltungselement zur Folge, dass bei hinsichtlich des Anschlusskonzepts völlig unterschiedlichen Motoren wesentliche Bauteile und Produktionsmittel unverändert bleiben können. So können das Blechpaket, aus dem die Spulenkerne gebildet werden, die Isolierung, üblicherweise aus Spritzguss hergestellt, und die Wickelmaschine, die ein hohes Investitionsvolumen darstellt, in gleicher Weise verwendet werden.

Die Erfindung wird nachfolgend anhand von Ausführungsbeispielen unter Bezug auf die Zeichnungen weiter erläutert.

### In den Zeichnungen zeigt

Fig. 1 eine Ausführungsform der Erfindung mit einer Spulenanordnung mit 12 Spulengruppen, die jeweils vier Spulen aufweisen, und einem Verschaltungselement zur Realisierung einer Sternschaltung mit vier parallelen Spulengruppen (Typ 1),
Fig. 2 eine Prinzip Darstellung einer Sternschaltung mit vier parallelen Spulengruppen (Typ 1),
Fig. 3 eine Ausführungsform der Erfindung mit einer Spulenanordnung mit 12 Spulengruppen, die jeweils vier Spulen aufweisen, und einem Verschaltungselement zur Realisierung einer Dreieckschaltung mit vier parallelen Spulengruppen (Typ 2),
Fig. 4 eine Prinzip Darstellung einer Dreieckschaltung mit vier parallelen Spulengruppen (Typ 2),
Fig. 5 eine Ausführungsform der Erfindung mit einer Spulenanordnung mit 12 Spulengruppen, die jeweils vier Spulen aufweisen, und einem Verschaltungselement zur Realisierung einer Sternschaltung mit vier seriellen Spulengruppen (Typ 3),
Fig. 6 eine Prinzip Darstellung einer Sternschaltung mit vier seriellen Spulengruppen (Typ 3),
Fig. 7 eine Ausführungsform der Erfindung mit einer Spulenanordnung mit 12 Spulengruppen, die jeweils vier Spulen aufweisen, und einem Verschaltungselement zur Realisierung einer Dreieckschaltung mit vier seriellen Spulengruppen (Typ 4),
Fig. 8 eine Prinzip Darstellung einer Dreieckschaltung mit vier seriellen Spulengruppen (Typ 4),
Fig. 9 eine Ausführungsform der Erfindung mit einer Spulenanordnung mit 12 Spulengruppen, die jeweils vier Spulen aufweisen, und einem Verschaltungselement zur Realisierung einer Sternschaltung, bei der jeweils zwei seriell angeordnete Spulengruppen parallel geschaltet sind (Typ 5),
Fig. 10 eine Prinzip Darstellung einer Sternschaltung, bei der jeweils zwei seriell angeordnete Spulengruppen parallel geschaltet sind (Typ 5),
Fig. 11 eine Ausführungsform der Erfindung mit einer Spulenanordnung mit 12 Spulengruppen, die jeweils vier Spulen aufweisen, und einem Verschaltungselement zur Realisierung einer Dreieckschaltung, bei der jeweils zwei seriell angeordnete Spulengruppen parallel geschaltet sind (Typ 6),
Fig. 12 eine Prinzip Darstellung einer Dreieckschaltung, bei der jeweils zwei seriell angeordnete Spulengruppen parallel geschaltet sind (Typ 6),
Fig. 13 eine vergrößerte Darstellung zweier Spulengruppen der Ausführungsformen der Erfindung gemäß Fig. 1 bis 12,

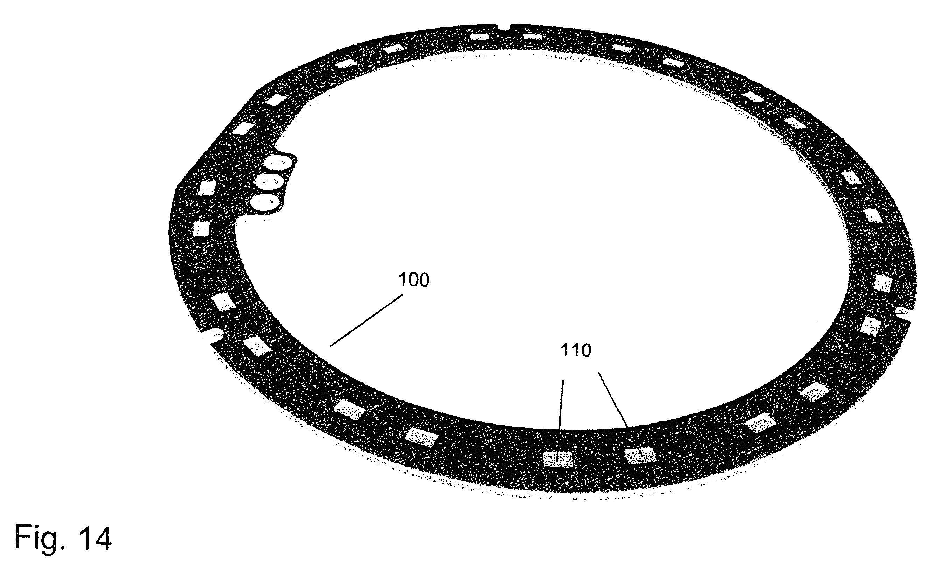

Fig. 14 ein Verschaltungselement in Form einer Leiterplatte,
Fig. 15 ein Verschaltungselement in Form einer Leiterplatte mit aufgebrachten Kontaktelementen (Schneid-Klemmkontakten),
Fig. 16 eine auseinandergezogene Prinzipskizze eines Verschaltungselements, in der die einzelnen Lagen, Kontaktpunkte, Durchkontaktierungen gezeigt sind,
Fig. 17 eine perspektivische Ansicht einer weiteren Ausführungsform der Erfindung mit einem Verschaltungselement, welches Ringkontakte aufweist,
Fig. 18 eine vergrößerte Teilansicht der Ausführungsform gemäß Fig. 17,
Fig. 19 eine nochmals vergrößerte Teilansicht der Ausführungsform gemäß Fig. 17 und
Fig. 20 einen Ringkontakt der Ausführungsform gemäß Fig. 17 bis 19.

Die nachfolgend beschriebenen Ausführungsbeispiele gehen aus von einer Gleichstrommaschine, bei der jeweils vier Spulen zu einer Spulengruppe zusammengefasst sind und die Gesamtanzahl von Spulen 48 beträgt. Die beschriebenen Ausführungsbeispiele weisen somit 12 Spulengruppen auf. Es versteht sich für den Fachmann, dass die Erfindung nicht auf diese spezielle Kombination beschränkt ist und sich dem Fachmann eine große Vielzahl anderer Kombinationen anbieten.

Die nachfolgend dargestellten Verschaltungen umfassen sechs Typen, nämlich eine Sternschaltung mit vier parallelen Spulengruppen (Typ 1), eine Dreieckschaltung mit vier parallelen Spulengruppen (Typ 2), eine Sternschaltung mit vier seriellen Spulengruppen (Typ 3), eine Dreieckschaltung mit vier seriellen Spulengruppen (Typ 4), eine Sternschaltung, bei der jeweils zwei seriell angeordnete Spulengruppen parallel geschaltet sind (Typ 5), und eine Dreieckschaltung, bei der jeweils zwei seriell angeordnete Spulengruppen parallel geschaltet sind (Typ 6). Es versteht sich für den Fachmann, dass, insbesondere bei anderen Gesamtanordnungen mit unterschiedlichen Anzahlen von Spulen und Spulengruppen, zahlreiche weitere Verschaltungen möglich sind, die in gleicher Weise, wie bei den nachfolgend beschriebenen Ausführungsbeispielen erläutert, realisiert werden können.

Nachfolgend werden zunächst Ausführungsbeispiele des erfindungsgemäßen Gleichstrommotors erläutert.

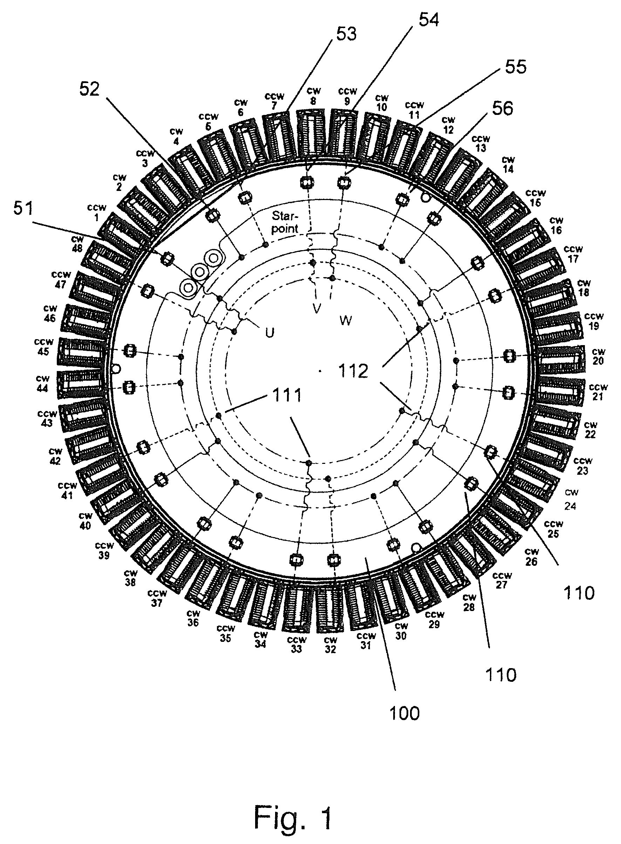

Fig. 1 zeigt eine Anordnung von insgesamt 48 Spulen, bei der 12 Spulengruppen mit jeweils vier Spulen ausgebildet sind. Die Spulen sind mit den Bezugszeichen 1 bis 48 versehen. Die erste Spulengruppe besteht aus den Spulen 1 bis 4, die zweite Spulengruppe aus den Spulen 5 bis 8, und so weiter. Die Spulen sind zudem hinsichtlich der Wickelrichtung gekennzeichnet, wobei die Abkürzung cw gemäß dem englischen Wort clockwise eine Wicklung im Uhrzeigersinn anzeigt und die Abkürzung ccw gemäß dem englischen Wort counterclockwise eine Wicklung im Gegenuhrzeigersinn.

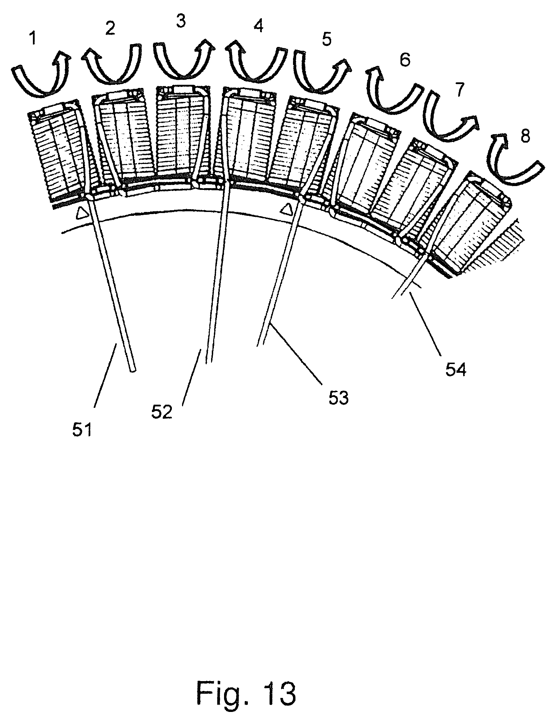

Fig. 13 zeigt als vergrößerten Ausschnitt 2 Spulengruppen mit jeweils vier Spulen, nämlich die aus den Spulen 1, 2, 3 und 4 bestehende erste Spulengruppe und die aus den Spulen 5, 6, 7 und 8 bestehende zweite Spulengruppe. Die Wickelrichtung ist infolge der Vergrößerung in Fig. 13 noch deutlicher zu erkennen als in Fig. 1 und in Fig. 13 zudem jeweils durch Pfeile angezeigt. Sowohl aus Fig. 1 als auch aus Fig. 13 ist ersichtlich, dass jeweils die erste und dritte Spule einer Spulengruppe im Gegenuhrzeigersinn gewickelt ist und jeweils die zweite und vierte Spule einer Spulengruppe im Uhrzeigersinn gewickelt ist, so dass der Wicklungssinn sich jeweils von Spule zu Spule ändert, jede Spulengruppe jedoch bezüglich Spulenanordnung und Wicklungssinn gleich ist.

In Fig. 1 und Fig. 13 sind zudem die Terminals, das heißt die Anfangskontaktpunkte und Endkontaktpunkte der ersten und zweiten Spulengruppe, mit den Bezugszeichen 51, 52, 53 und 54 gekennzeichnet. In Fig. 1 sind zudem die Anfangskontaktpunkte und Endkontaktpunkte der dritten Spulengruppe mit den Bezugszeichen 55 und 56 versehen.

Fig. 1 zeigt zudem ein Ausführungsbeispiel eines Verschaltungselements in Form einer Leiterplattenanordnung 100 und Klemmen 110 zur Aufnahme der Anfangskontaktpunkte und Endkontaktpunkte beziehungsweise Terminals 51, 52, 53, 54, 55 und 56. Die Terminals 51 und 52 der ersten Spulengruppe mit den Spulen 1 bis 4 sind mit durchgezogenen Linien dargestellt. Sie entsprechen der Phase U. Die Terminals 53 und 54 der zweiten Spulengruppe mit den Spulen 5 bis 8 sind mit punktierten beziehungsweise gestrichelten Linien dargestellt. Sie entsprechen der Phase V. Die Terminals 55 und 56 der dritten Spulengruppe mit den Spulen 9 bis 12 sind mit strichpunktierten Linien dargestellt. Sie entsprechen der Phase W. Dies gilt entsprechend für die weiteren Spulengruppen dieses Ausführungsbeispiels, die sich in Umfangsrichtung in gleicher Anordnung und Reihenfolge anschließen.

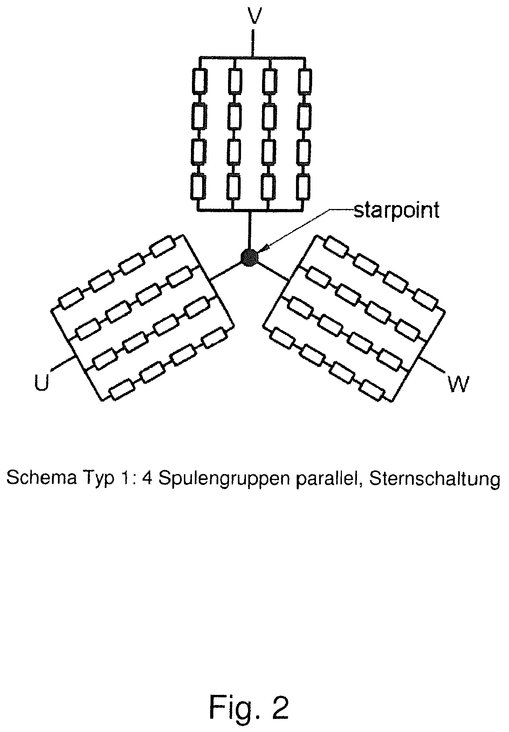

Entsprechende konzentrische Kreise mit durchgezogenen, punktierten beziehungsweise gestrichelten strichpunktierten Linien sowie Kontaktpunkte 111 und Nichtkontaktpunkte 112 und der auf dem in Rede stehenden Gebiet unter dem Fachbegriff Starpoint bekannte Sternpunkt lassen zudem die Verschaltung zu dem Verschaltungskonzept zur Realisierung einer Sternschaltung mit vier parallelen Spulengruppen (Typ 1) erkennen, das schematisch in Fig. 2 dargestellt ist.

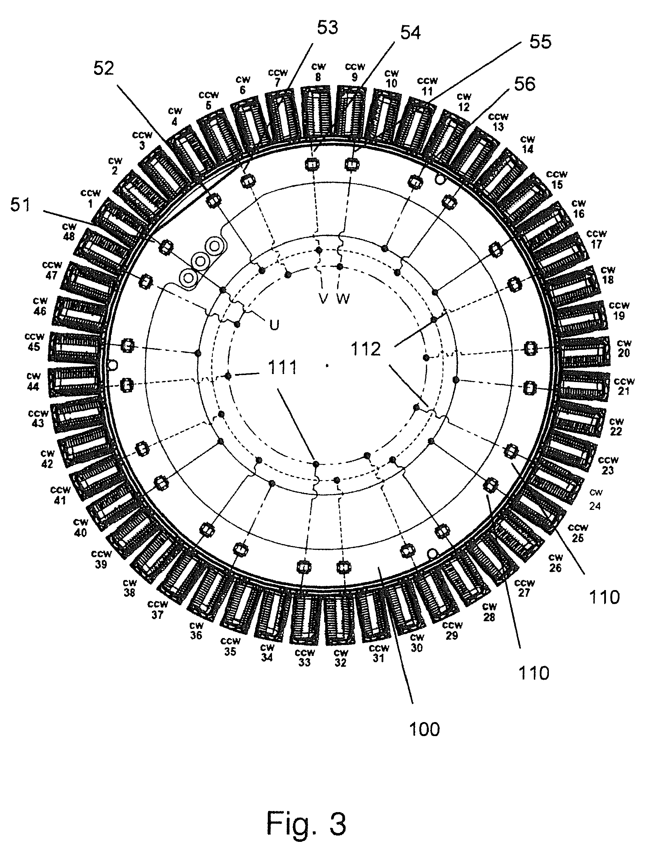

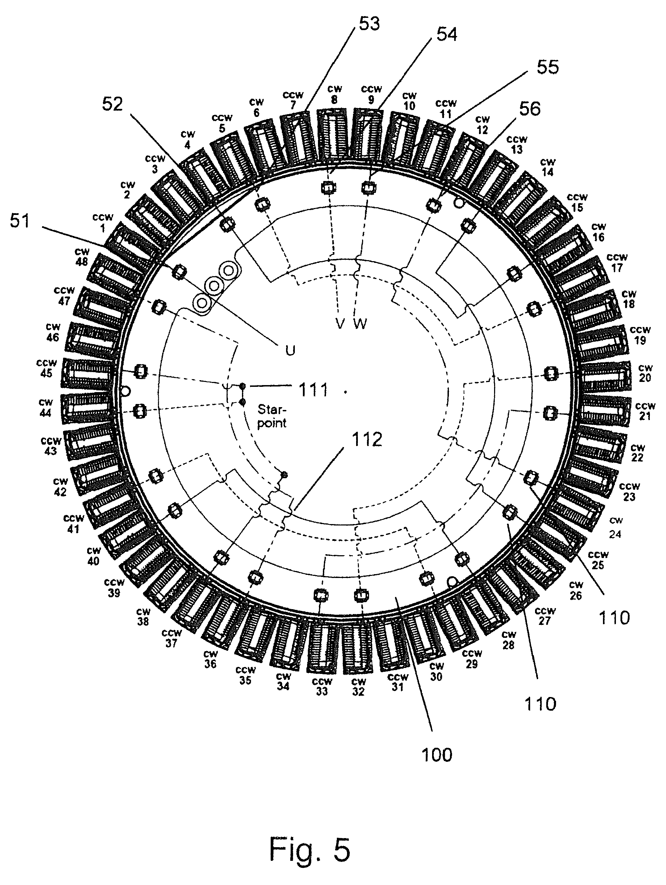

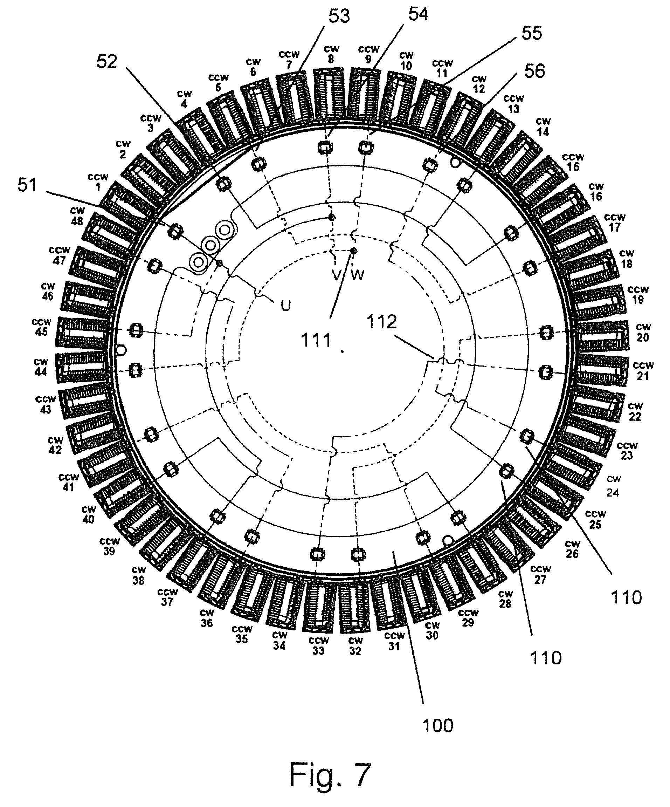

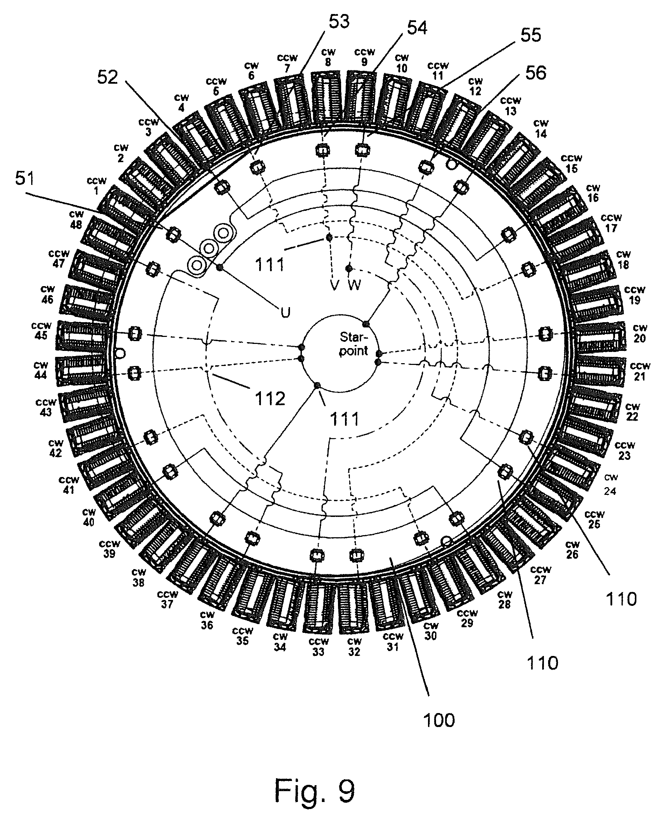

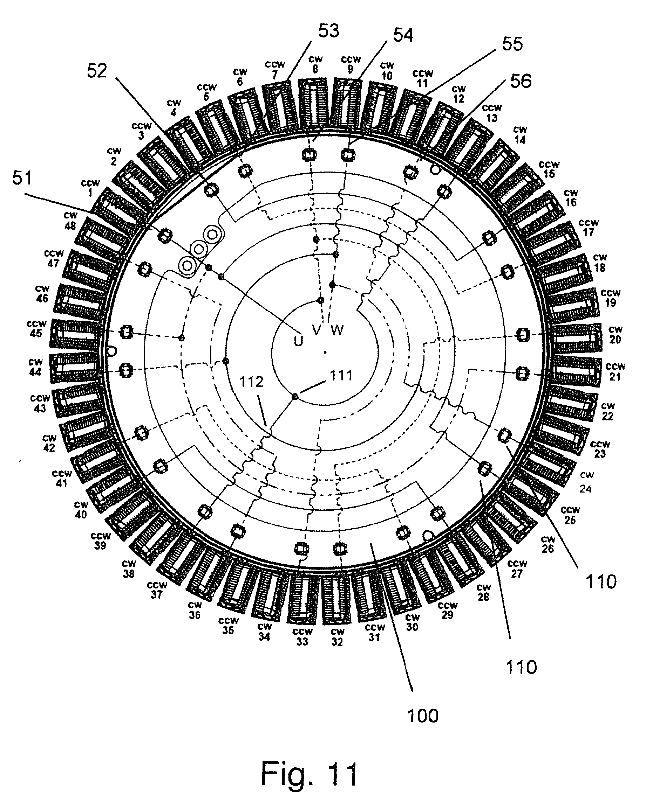

In entsprechender Weise zeigt Fig. 3 eine Ausführungsform der Erfindung mit einer Spulenanordnung mit 12 Spulengruppen, die jeweils vier Spulen aufweisen, und einem Verschaltungselement zur Realisierung einer Dreieckschaltung mit vier parallelen Spulengruppen (Typ 2), Fig. 5 eine Ausführungsform der Erfindung mit einer Spulenanordnung mit 12 Spulengruppen, die jeweils vier Spulen aufweisen, und einem Verschaltungselement zur Realisierung einer Sternschaltung mit vier seriellen Spulengruppen (Typ 3), Fig. 7 eine Ausführungsform der Erfindung mit einer Spulenanordnung mit 12 Spulengruppen, die jeweils vier Spulen aufweisen, und einem Verschaltungselement zur Realisierung einer Dreieckschaltung mit vier seriellen Spulengruppen (Typ 4), Fig. 9 eine Ausführungsform der Erfindung mit einer Spulenanordnung mit 12 Spulengruppen, die jeweils vier Spulen aufweisen, und einem Verschaltungselement zur Realisierung einer Sternschaltung, bei der jeweils zwei seriell angeordnete Spulengruppen parallel geschaltet sind (Typ 5), und Fig. 11 eine Ausführungsform der Erfindung mit einer Spulenanordnung mit 12 Spulengruppen, die jeweils vier Spulen aufweisen, und einem Verschaltungselement zur Realisierung einer Dreieckschaltung, bei der jeweils zwei seriell angeordnete Spulengruppen parallel geschaltet sind (Typ 6).

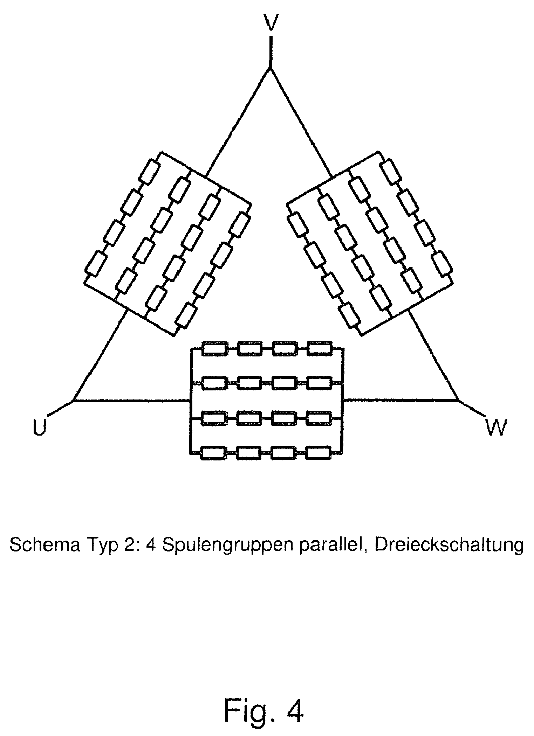

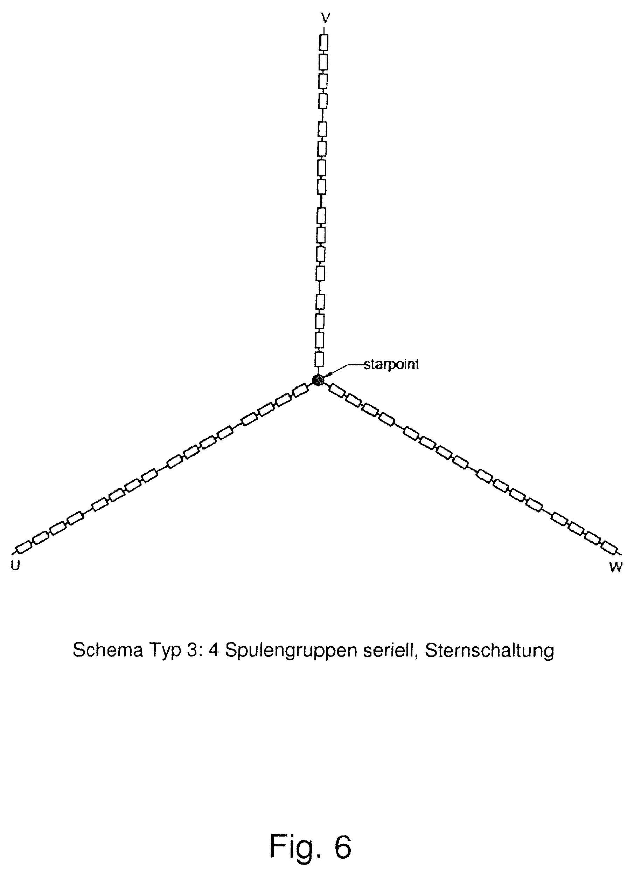

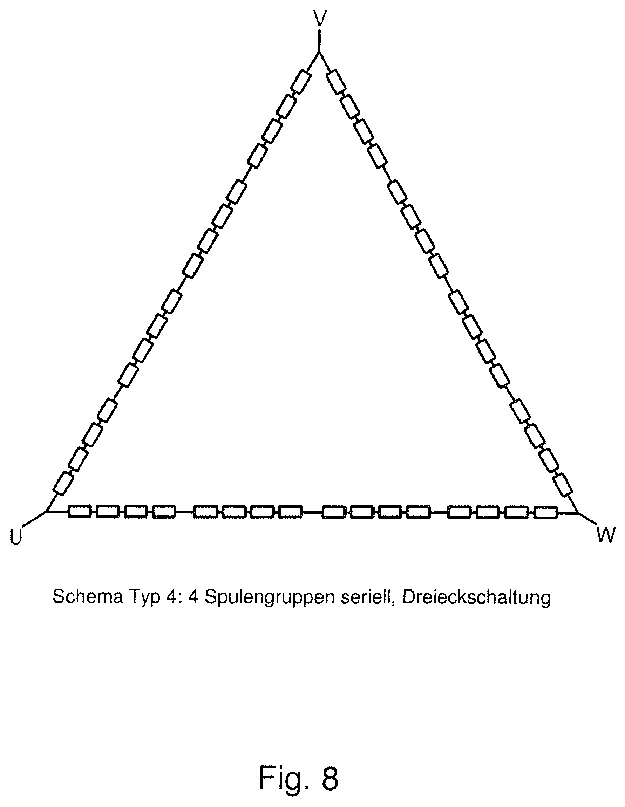

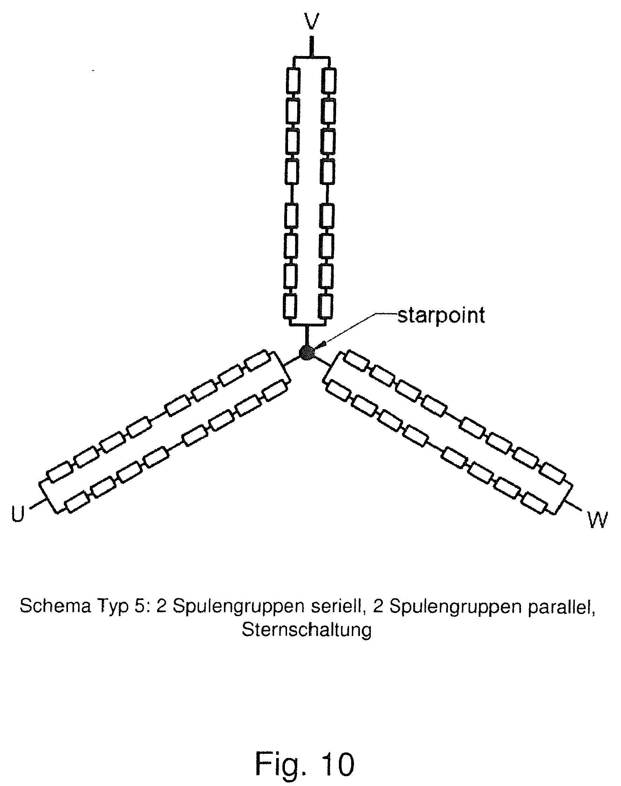

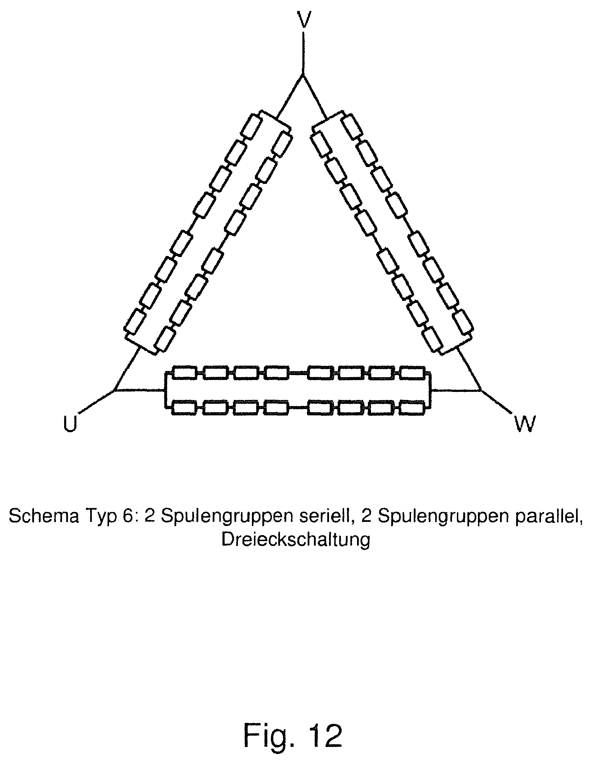

Die diesbezüglichen Verschaltungskonzepte sind schematisch jeweils in den Figuren 4, 6, 8, 10 und 12 dargestellt.

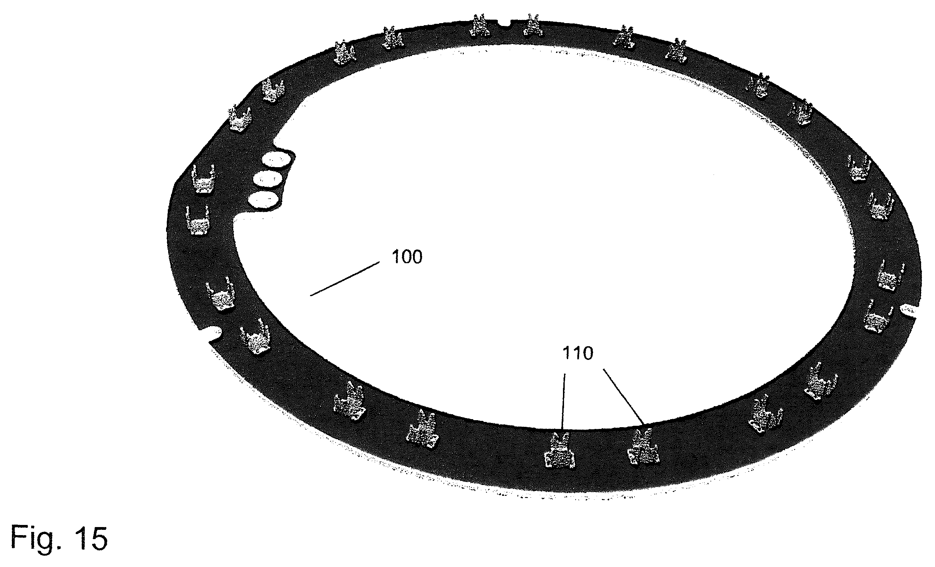

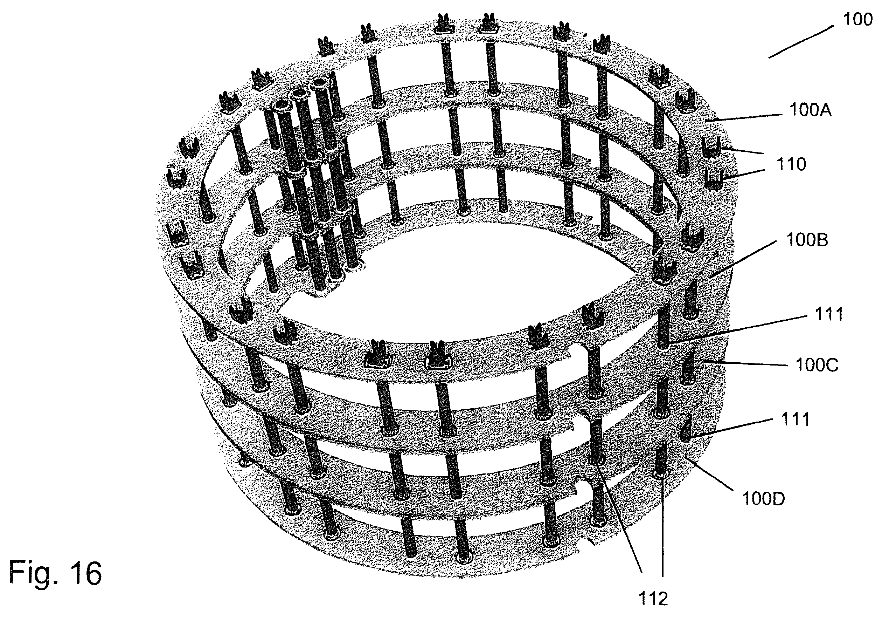

Fig. 16 zeigt vergrößert, schematisch und auseinandergezogen eine mehrlagige Leiterplattenanordnung 100, auch Multilayerleiterplattenanordnung genannt, mit einer ersten Außenlage 100A, einer ersten Innenlage 100B, einer zweiten Innenlage 100C und einer zweiten Außenlage 100D sowie den Klemmen 110 und den Kontaktpunkten 111 und Nichtkontaktpunkten 112. Fig. 15 zeigt die Leiterplattenanordnung 100 im zusammengefügten Zustand.

Bei der Darstellung in Fig. 16 ist jeweils dann, wenn eine Klemme 110, beispielsweise als Schneid-Klemmkontakt ausgeführt, beziehungsweise die von dieser Klemme ausgehende Durchkontaktierung (hier als Säule dargestellt) in Bezug auf einen der vier Ringe, das heißt die Deckplatte 100A, die erste Außenlage 100A, die erste Innenlage 100B, die zweite Innenlage 100C und die zweite Außenlage 100D, mit einem weißen Ring beziehungsweise einem weißen Rechteck umgeben ist, diesbezüglich eine Isolierung vorgenommen. Dort, wo kein Ring oder Rechteck gezeigt ist, findet Kontakt statt.

Dieser Aufbau einer sogenannten Multilayerleiterplatte kann beispielsweise dadurch erreicht werden, dass in dem Fachmann bekannter Art und Weise einzelne Lagen kupferbeschichteter Leiterplatten mittels sogenannter Prepregs aufeinander laminiert werden. Vor dem Laminieren werden die Kupferschichten mittels fotolithographischem Verfahren partiell entfernt, sodass das Leiterbahnenbild entsteht. Dieser aus den verschiedenen Lagen entstandene sandwichartige Aufbau wird nun an den vorbestimmten Durchkontaktierungspunkten mit Bohrungen versehen, die anschließend in einem chemischen und dann galvanischen Verfahren verkupfert werden. Diese Durchkontaktierungen (sog. vias) sind mit dem angrenzenden Kupfer der einzelnen Lagen verbunden. Dort, wo das Kupfer weggeätzt wurde, findet kein Kontakt statt.

Auf diese Multilayerleiterplatte können nun die Kontakte aufgebracht werden. In dem hier gezeigten Beispiel sind diese Kontakte mittels Oberflächenlötverfahren (SMD aus dem englischen für surface mounted device) auf die entsprechenden vorgesehenen Lötkontaktpunkte aufgebracht.

Bei einer ansonsten gleichen Gleichstrommaschine kann somit durch ein anderes Verschaltungselement, beispielsweise in Form einer vorstehend beschriebenen Leiterplattenanordnung 100 oder auch mit den nachfolgend genannten oder weiteren funktionsgleichen Verschaltungselementen, eine Gleichstrommaschine mit einer anderen Charakteristik realisiert werden, beispielsweise gemäß den oben beschriebenen Typen 1 bis 6, obwohl alle Grundabmessungen, die Spulen und die Wicklungen exakt identisch sind. Hierdurch kann mit geringem Investitionsbedarf eine große Variabilität erreicht werden.

Hinsichtlich des Ausmaßes der Variabilität wird auf die nachfolgende Tabelle verwiesen, die für die im Zusammenhang mit den vorliegenden Ausführungsbeispielen betrachteten Kombinationen gemäß Typ 1 bis 6 diesbezügliche theoretische Kennwerte zeigt.

Theoretische Verhältnisse bei gleichem Außenleiterstrom und Außenleiterspannung:

| Typ | Strang | Verschaltung | Drehzahl | Drehmoment |
|---|---|---|---|---|
| 1 | 4 parallel | Stern | 4 | 0,25 |
| 2 | 4 parallel | Dreieck | 6,928 | 0,144 |
| 3 | 4 Reihe | Stern | 1 | 1 |
| 4 | 4 Reihe | Dreieck | 1,73 | 0,577 |
| 5 | 2 parallel, 2 Reihe | Stern | 2 | 0,5 |
| 6 | 2 parallel, 2 Reihe | Dreieck | 3,464 | 0,289 |

Bei der vorstehend beschriebenen Leiterplattenanordnung 100 kann der Wickelvorgang einschließlich des Kontaktierens der ersten Außenlage 100A, die die Abgriffspunkte oder Kontaktpunkte beziehungsweise Kontaktstellen enthält, für alle Motortypen gleich sein. Die Unterschiede in der Verschaltung werden durch unterschiedliche Ausführungen der Leiterplattenanordnung 100 verwirklicht, die jeweils eine unterschiedliche Verbindung der jeweiligen Abgriffspunkte oder Kontaktpunkte erzeugen.

Es versteht sich für den Fachmann, dass anstelle der vorstehend beschriebenen Leiterplattenanordnung 100 auch andere Verschaltungselemente denkbar sind, insbesondere eine Leiterplattenanordnung, die mit mehreren Verschaltungskonfigurationen ausgestattet ist, welche mittels Schaltelementen, die auf der Leiterplatte aufgebracht sind, angesteuert werden können. So kann eine Maschine mit einer derartigen Leiterplatte ausgestattet in einem ersten Betriebspunkt mit hohem Drehmoment und geringer Drehzahl betrieben werden und in einem zweiten Betriebspunkt mit einem geringen Drehmoment und einer hohen Drehzahl. Somit lässt sich eine elektronische Schaltung realisieren, die es ermöglicht, eine an die Betriebsbedingungen angepasste Maschinencharakteristik zu realisieren. Der Vorteil liegt darin, dass bei Betrieb der Maschine über ihr gesamtes Leistungsspektrum die Energiequelle (Strom und Spannung), sowie die dazugehörige Leistungselektronik kleiner dimensioniert werden kann. Auch eine solche, mehrere Verschaltungsmuster, die während des Betriebes der Gleichstrommaschine geschaltet werden können, realisierende Leiterplattenanordnung ist als separates und eigenständiges Verschaltungselement in Sinne der Erfindung darstellbar.

Die Anfangskontaktpunkte und Endkontaktpunkte beziehungsweise Terminals 51, 52, 53, 54, 55 und 56 können als abgreifbare Kontaktstellen ausgeführt werden, die beim Einlegen des Verschaltungselements in die Spulenanordnung mit entsprechenden Kontaktstellen des Verschaltungselements in leitende Berührung kommen.

Gemäß einer Ausführungsform der Erfindung können aus einem flachen metallischen Material gebogene und ausgeformte Ringkontakte 210 zur Verschaltung vorgesehen sein, die in gewünschter Weise, konzentrisch und/oder übereinander angeordnet, in einem das Verschaltungselement 200 komplettierenden Trägerelement 201 angeordnet sind.

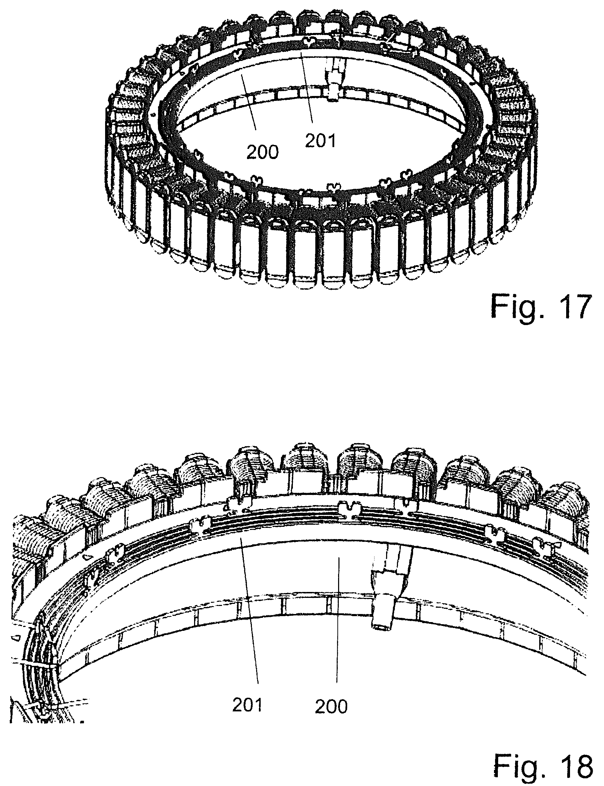

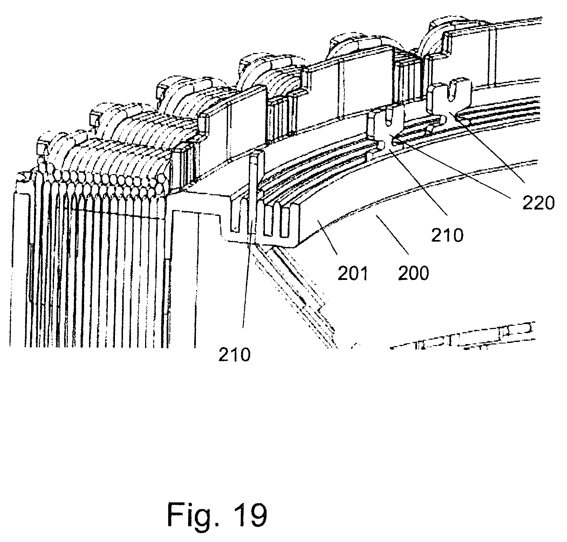

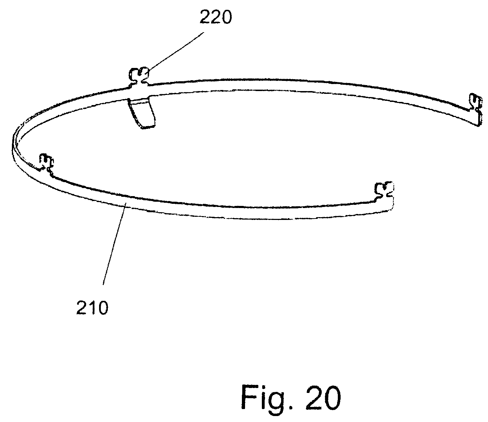

Fig. 17 zeigt in einer perspektivischen Ansicht eine weitere Ausführungsform der Erfindung mit einem Verschaltungselement 200, welches Ringkontakte 210 aufweist, die in ein mit Anschlussstellen 220 zur Aufnahme der der Anfangskontaktpunkte und Endkontaktpunkte beziehungsweise Terminals 51, 52, 53, 54, 55 und 56 ausgelegt sind. Die Fig. 18 und 19 zeigen jeweils vergrößerte Teilansichten des Verschaltungselements 200 und Fig. 20 einen einzelnen Ringkontakt 210.

Die Erfindung ist nicht auf die in den Figuren dargestellten Ausführungsformen beschränkt. Es ist vielmehr für den Fachmann ersichtlich, dass die in den beigefügten Patentansprüchen definierte Erfindung zahlreiche weitere Modifikationen umfasst, von denen nachfolgend einige beispielhaft genannt sind.

In den Figuren 1, 3, 5, 7, 9 und 11 sind die Spulen sternförmig nach außen gerichtet und werden bei einer einsatzbereiten Gleichstrommaschine von einem hier nicht dargestellten Ring, der mehrere Magnete aufweist, die abwechselnd Süd und Nord magnetisiert sind, umgeben. Sowohl dieser Ring als auch das die Spulen aufweisende Bauteil können Stator oder Rotor sein. Es versteht sich zudem, dass die Spulen auch sternförmig nach innen gerichtet sein und ringförmig ein Bauteil umgeben können, das mehrere Magnete aufweist, die abwechselnd Süd und Nord magnetisiert sind. Auch in diesem Fall können sowohl das äußere als auch das innere Bauteil jeweils Rotor oder Stator sein.

Im Folgenden wird, soweit nicht zuvor schon im Zusammenhang mit der Beschreibung der Ausführungsbeispiele einer erfindungsgemäßen Gleichstrommaschine erfolgt, ein Ausführungsbeispiel des erfindungsgemäßen Verfahrens zur Herstellung einer Gleichstrommaschine erläutert.

In an sich bekannter Weise werden die Kerne der Spulen aus Einzelblechen zu einem sogenannten Blechpaket paketiert und mit einer Isolierung versehen, beispielsweise im Spritzgussverfahren. Die mit einer Isolierschicht umgebenen einzelnen Zähne des Blechpaketes werden dann mit isoliertem Kupferdraht zu Einzelspulen umwickelt. Je nach Anwendungsfall können auch Einzelzähne vorab zusammengesetzt und umwickelt und dann zusammengefügt werden. Das Vorstehende stellt das Bereitstellen einer wickelbereiten Spulenkernanordnung dar.

In an sich bekannter Weise werden die Kerne der Spulen aus Blechpaketen zusammengesetzt und mit einer Isolierung versehen, beispielsweise im Spritzgussverfahren. Die mit einer Isolierschicht umgebenen Spulen werden dann gewickelt. Je nach Anwendungsfall können auch Spulengruppen vorab zusammengesetzt und umwickelt und dann zusammengefügt werden. Das Vorstehende stellt das Bereitstellen einer wickelbereiten Spulenanordnung dar.

Bei den Spulengruppen werden Anfangskontaktpunkte und Endkontaktpunkte ausgebildet. Dies stellt das Bereitstellen abgreifbarer Anfangskontaktpunkte und Endkontaktpunkte dar.

Ein Verschaltungselement wird so ausgeführt, dass es mit den Anfangskontaktpunkten und Endkontaktpunkten der Spulengruppen in Kontakt bringbar ist und ein spezifisches Verschaltungskonzept verwirklicht. Ein Verschaltungskonzept im Sinne der vorliegenden Erfindung ist beispielsweise eine Verschaltung der Spulengruppen gemäß den zuvor beschriebenen Typen 1 bis 6. Dies stellt das Bereitstellen eines Verschaltungselements zur Verwirklichung eines spezifischen Verschaltungskonzepts dar.

Das Einsetzen des Verschaltungselements kann vor oder nach dem Bewickeln der wickelbereiten Spulenkernanordnung erfolgen. Im erstgenannten Fall wird das Verschaltungselement mit den Anfangskontaktpunkten und Endkontaktpunkten der Spulengruppen in Berührung gebracht und in dieser Funktionsstellung fixiert. Dies kann je nach Ausführung und Ausgestaltung des Verschaltungselements während oder nach dem Wickelvorgang geschehen.

## Patentansprüche

1. Gleichstrommaschine, umfassend:
einen Stator und einen Rotor, wobei einer der beiden mehrere Magnete aufweist, die abwechselnd Süd und Nord magnetisiert sind, und der andere mehrere Spulen aufweist, die durch Umwickeln von Zähnen mit isoliertem Draht gebildet sind, wobei zwischen diesen Spulen jeweils Schlitze gebildet und die Spulen zu Spulengruppen zusammengefasst sind,
und einen stromgesteuerten Inverter zum Ansteuern der Maschine,
wobei jede Spulengruppe einen Anfangskontaktpunkt (51, 53, 55) und einen Endkontaktpunkt (52, 54, 56) aufweist und die Spulengruppen zu einem definierten Verschaltungskonzept verbunden sind und
wobei die Anfangskontaktpunkte und Endkontaktpunkte durch ein Verschaltungselement (100; 200) verbunden sind, das spezifisch für das definierte Verschaltungskonzept ausgelegt ist.

2. Gleichstrommaschine nach Anspruch 1, **dadurch gekennzeichnet, dass** nach in einer Umfangsrichtung gesehen jeder letzten Spule einer Spulengruppe ein Endkontaktpunkt (52, 54, 56) in Form eines Spulengruppenendterminals bereitgestellt ist und dass vor der ersten Spule der in Umfangsrichtung nächsten Spulengruppe ein Anfangskontaktpunkt (51, 53, 55) in Form eines Spulengruppenanfangsterminals bereitgestellt ist.

3. Gleichstrommaschine nach Anspruch 1 oder 2, **dadurch gekennzeichnet, dass** das Verschaltungselement in Form einer Leiterplattenanordnung (100) bereitgestellt ist, die so ausgeführt ist, dass sie das definierte Verschaltungskonzept verwirklicht.

4. Gleichstrommaschine nach Anspruch 3, **dadurch gekennzeichnet, dass** die Leiterplattenanordnung (100) Kontaktstellen (110) für Spulengruppenendterminals und Spulengruppenanfangsterminals aufweist.

5. Gleichstrommaschine nach Anspruch 3 oder 4, **dadurch gekennzeichnet, dass** die Leiterplattenanordnung (100) eine erste Außenlage (100A), zwei Innenlagen (100B, 100C) und eine zweite Außenlage (100D) aufweist.

6. Gleichstrommaschine nach Anspruch 3, 4 oder 5, **dadurch gekennzeichnet, dass** die Leiterplattenanordnung (100) mehrere Verschaltungskonfigurationen aufweist, welche mittels Schaltelementen, die vorzugsweise auf der Leiterplatte aufgebracht sind, zur Realisierung unterschiedlicher Verschaltungskonfigurationen ansteuerbar sind.

7. Gleichstrommaschine nach Anspruch 1 oder 2, **dadurch gekennzeichnet, dass** das Verschaltungselement (200) aus einem flachen metallischem Material gebogene und ausgeformte Ringkontakte (210) aufweist, die vorzugsweise aus einem flachen metallischem Material gebogen und ausgeformt sind.

8. Verfahren zur Herstellung einer Gleichstrommaschine, umfassend die Schritte:
- Bereitstellen einer wickelbereiten Spulenkernanordnung,
- Bereitstellen abgreifbarer Anfangskontaktpunkte und Endkontaktpunkte,
- Bereitstellen eines Verschaltungselements zur Verwirklichung eines spezifischen Verschaltungskonzepts,
- Einsetzen und Fixieren des Verschaltungselements so, dass es mit den Anfangskontaktpunkten und Endkontaktpunkten in leitende Berührung gelangt, und
- Bewickeln der wickelbereiten Spulenkernanordnung.

9. Verfahren zur Herstellung einer Gleichstrommaschine nach Anspruch 8, **dadurch gekennzeichnet, dass** das Einsetzen des Verschaltungselements vor dem Bewickeln der wickelbereiten Spulenkernanordnung erfolgt.

10. Verfahren zur Herstellung einer Gleichstrommaschine nach Anspruch 8, **dadurch gekennzeichnet, dass** das Einsetzen und Fixieren des Verschaltungselements so, dass es mit den Anfangskontaktpunkten und Endkontaktpunkten in leitende Berührung gelangt, nach dem Bewickeln der wickelbereiten Spulenkernanordnung erfolgt.
